# EUROPÄISCHE PATENTSCHRIFT

(11) **EP 2 995 429 B1**
(45) Veröffentlichungstag und Bekanntmachung des Hinweises auf die Patenterteilung: **13.01.2021**
(21) Anmeldenummer: 15175577.4
(22) Anmeldetag: 07.07.2015
(51) Int. Cl.: B25F 5/00, G06K 19/07

(54) **ANORDNUNG UND VERFAHREN ZU DEREN BETRIEB**
ASSEMBLY AND METHOD FOR ITS OPERATION
AGENCEMENT ET SON PROCEDE DE FONCTIONNEMENT

(30) Priorität: 08.09.2014 DE 102014217880
(43) Veröffentlichungstag der Anmeldung: 16.03.2016
(73) Patentinhaber: Robert Bosch GmbH, 70442 Stuttgart (DE)
(72) Erfinder: Kauth, Christoph, 97816 Lohr Am Main (DE)

(56) Entgegenhaltungen:
- EP-A1- 1 533 767
- EP-A2- 1 690 648

## Beschreibung

Die vorliegende Erfindung bezieht sich auf ein Gerät und ein Verfahren zum Betrieb des Geräts, wobei das Gerät insbesondere im Rahmen eines industriellen Automatisierungsprozesses verwendbar ist, der beispielsweise mit einer Automatisierungsanlage ausgeführt werden kann, jedoch nicht zwingend mit einer solchen auszuführen ist.

Eine Automatisierungsanlage kann mindestens ein Gerät mit einem Maschinenteil/Geräteteil aufweisen, wie beispielsweise ein Schraubgerät mit einem Schrauberabtrieb, ein Nietgerät mit einem Nietwerkzeug, ein Schweißgerät mit einer Schweißzange, ein Antriebsregler mit einem Servomotor und dergleichen. Die Funktionen der Maschinenteile/Geräteteile dürfen schon aus Sicherheits- oder Haftungsgründen nur von berechtigten Benutzern verwendet werden. Beispielsweise darf ein Lehrling einen Schrauber verwenden, jedoch ist der Lehrling beispielsweise noch nicht alleine berechtigt, ein Schweißgerät zu bedienen. Es ist auch möglich, dass ein Abteilungsleiter ein Gerät der Automatisierungsanlage neu konfigurieren darf, jedoch ein Facharbeiter (Werker) nur die Funktionen des Geräts abrufen darf. Zudem kann es sein, dass nur ein spezieller Mitarbeiter des Betriebs berechtigt ist, eine Wartung des Geräts der Automatisierungsanlage auszuführen.

Um solchen unterschiedlichen Berechtigungen bei der Verwendung des Geräts der Automatisierungsanlage Rechnung zu tragen, ist es erforderlich, die Berechtigung des Benutzers des Geräts vor der Verwendung des Geräts zu prüfen.
Hierzu authentifiziert sich der Benutzer üblicherweise mit Hilfe der Eingabe eines Passworts oder des Einlesens eines Zugangscodes, z.B. direkt am Gerät. Er muss dazu das Gerät selbst oder mittels geeigneter Eingabemittel zunächst in einen Betriebsmodus versetzen, in dem eine Benutzeridentifikation möglich ist. Wechselt der Benutzer noch dazu häufig Einsatzort und Geräte, gestaltet sich die ständige Eingabe bzw. das Lesen der Berechtigung für den Benutzer als sehr zeitintensiv.

EP 1 690 648 A2 beschreibt ein Werkzeug, wie beispielsweise ein Schraubwerkzeug, mit Antidiebstahlfunktionen mit Merkmalen gemäß dem Oberbegriff von Anspruch 1. EP 1 533 767 A1 beschreibt ein Sicherheitsmanagementsystem zur Verhinderung des Diebstahls von Werkzeugen oder Bauausrüstung auf Baustellen.

Daher ist es die Aufgabe der vorliegenden Erfindung, ein Gerät und ein Verfahren zum Betrieb des Geräts bereitzustellen, mit welchem die zuvor genannten machteiligen Aspekte adressiert werden.

Erfindungsgemäß werden ein Gerät und ein Verfahren mit den Merkmalen der unabhängigen Patentansprüche vorgeschlagen, um diese Aufgabe zu lösen. Vorteilhafte Ausgestaltungen sind Gegenstand der Unteransprüche sowie der nachfolgenden Beschreibung.

Ein besonderer Aspekt der Erfindung besteht darin, das Gerät als Teil einer Anordnung mit einem Personen-Detektionsmittel auszustatten. as Gerät bzw. die Anordnung wird derart eingerichtet, dass beim Detektieren einer Person mittels des Personen-Detektionsmittels eine der Gerätefunktionen selbsttätig von der Anordnung - d.h. ohne Erfordernis eines manuellen Bedienschrittes oder einer aktiven Benutzereingabe - mittels eines Gerätefunktionswahlmittels auswählbar ist. Unter dem Begriff Personen-Detektionsmittel sollen sämtliche Einrichtungen verstanden werden, welche auf die reine Anwesenheit von Lebewesen oder auf von Lebewesen mitgeführten Zugangsmitteln reagieren können. Ein nicht als einschränkend zu betrachtendes und lediglich beispielhaft aufgeführtes Personen-Detektionsmittel kann ein Sensor sein, welcher auf der Messung von kapazitiven Veränderungen in der Geräteumgebung oder auf der Erfassung von Wärmestrahlung basiert, welche von einer Person emittiert wird (Bewegungsmelder). Es kann sich jedoch weiter beispielhaft auch um eine Einrichtung handeln, welche basierend auf einem Funkfeld das Geräteumfeld nach einer kompatiblen und von der Person mitzuführenden Einrichtung scannt und aus dem Erkennen einer kompatiblen Einrichtung die Detektion einer Person ableitet. Eine kompatible Einrichtung kann beispielsweise ein Mobilteil mit oder ohne Telefonfunktionalität sein, bei dem WLAN oder Bluetooth oder ein vergleichbares funkbasiertes Kommunikationsmittel aktiviert ist, so dass mittels des Funkfeldes basierend auf WLAN oder Bluetooth Daten zwischen der kompatiblen Einrichtung und dem Personen-Detektionsmittel ausgetauscht werden können. Genügen würde es beispielsweise, wenn das Personen-Detektionsmittel und/oder die kompatible Einrichtung eingerichtet wäre, einen Zugriffspunkt (Access Point) zu realisieren, mittels dessen eine Funkverbindung herstellbar ist (WLAN, Bluetooth und dergleichen). Eine kompatible Einrichtung eines weiteren Ausführungsbeispiels kann auch ein RFID/NFC-Tag sein, der passiv als Transponder oder aktiv arbeitet. Der Transponder kann auch ein Kryptographiemodul umfassen, um unbefugtes Lesen zu verhindern oder die Identifikation der Person zu ermöglichen.

Die Anordnung bzw. das Gerät kann eine Gerätesteuerung umfassen, welche dazu eingerichtet ist, das Gerätefunktionswahlmittel zu implementieren, welches unter Berücksichtigung eines Signals des Personen-Detektionsmittels eine Gerätefunktion anschließend selbsttätig auswählt. Beispielsweise kann die Anordnung bzw. das Gerät bei Annäherung eines Benutzers das Gerät von einem Geräte-Stromsparmodus - in dem das Gerät minimale Leistungsaufnahme hat in einen Benutzeridentifikationsmodus wechseln, in dem sich das Gerät bereithält einen potentiellen Benutzer zu identifizieren.

Ein sich dem Gerät annähernder Benutzer findet dadurch ein bereits zur Benutzeridentifikation vorbereitetes Gerät vor, ohne dass er selbst irgendwelche Eingaben oder Maßnahmen am Gerät vornehmen muss, zum Beispiel den Geräte-Stromsparmodus durch Tasteneingaben manuell beenden. Das Gerät selbst erkennt, dass sich ein potentieller Benutzer dem Gerät nähert und bereitet die erforderlichen Maßnahmen zur Benutzeridentifikation selbsttätig vor. Es muss daher nicht abgewartet werden, bis die Firmware der Anordnung/des Geräts sich initialisiert hat und/oder das Betriebssystem gebootet wurde und dergleichen, dies alles kann schon während der Annäherung des Benutzers erfolgen.

Bevorzugt umfasst die Anordnung oder das Gerät eine Personen-Abstandsermittlung und ist derart eingerichtet, dass der Abstand einer detektierten Person zum Gerät selbsttätig ermittelt wird. Hierdurch kann sichergestellt werden, dass nur Personen im unmittelbaren Umfeld des Geräts als potentielle Benutzer erkannt und der Betriebsmodus für diesen Benutzer gewechselt werden kann. Bei Personen, welche außerhalb eines definierten Abstandes detektiert werden, kann das Gerät in seinem aktuellen Betriebszustand verweilen, beispielsweise in im Geräte-Stromeinsparmodus. Dies ist besonders vorteilhaft bei Akku-Geräten.

Die erfindungsgemäßen Merkmale der Anordnung sind vorzugsweise komplett, zumindest aber teilweise von dem Gerät umfasst. Daraus resultiert ein Gerät mit zumindest einem Geräteteil zur Realisierung zumindest einer oder mehrerer Gerätefunktionen. Zusätzlich mit zumindest einem Gerätefunktionswahlmittel, zur Auswahl zumindest einer der Gerätefunktionen. Zusätzlich mit einem ein Detektionsmittel, zur Detektion zumindest eines Lebewesens im Umfeld des Geräts. Das Detektionsmittel kann auch außerhalb des Gerätes angeordnet sein und mit dem Gerät mittels einer Funkverbindung verbunden sein.

Das Gerät bzw. die Anordnung ist derart eingerichtet, dass beim Detektieren des Lebewesens mittels des Detektionsmittels eine der Gerätefunktionen mittels des Gerätefunktionswahlmittels selbsttätig auswählbar ist. Die Information vom Detektionsmittel, dass ein Lebewesen detektiert wurde, erhält das Gerät bzw. die Anordnung entweder mittels einer internen Datenverbindung oder mittels einer externen Datenverbindung, je nachdem ob es sich um ein integriertes oder externes Detektionsmittel handelt. Auch ein Mischbetrieb mit internem und externem Detektionsmittel kann vorgesehen sein, wobei die Signale beider Detektionsmittel zusammen ausgewertet werden können.

Weiter bevorzugt umfasst das Gerät bzw. die Anordnung ein erstes drahtloses Sende-/Empfangsmittel, mittels dessen Daten mit einem nicht vom Gerät umfassten zweiten drahtloses Sende-/Empfangsmittel austauschbar sind. Bei Detektion einer Person kann das erste Sende-/Empfangsmittel aktiviert werden. Bei dem zweiten drahtloses Sende-/Empfangsmittel kann es sich um einen Transponder handeln, welcher von einem berechtigten Geräte-Benutzer mitgeführt werden muss. Der Transponder könnte mittels NFC, RFID-Technik und dergleichen realisiert sein und vorzugsweise auch einen Speicher mit Daten zur Benutzeridentifikation umfassen. Dies eröffnet die Möglichkeit eine drahtlose Personenidentifikation durchzuführen bei Personenannäherung, ohne dass manuelle Eingaben am Gerät erforderlich werden. Alternativ zum Transponder kommt auch das weiter oben genannte Mobilteil mit WLAN/Bluetooth-Funktechnik und dergleichen in Frage. Dabei kann das Gerät und/oder das Mobilteil selbst als Zugangspunkt zur Herstellung einer Datenverbindung eingerichtet sein, so dass zwischen Gerät und Mobilteil bei etablierter Datenverbindung Daten zur Benutzeridentifikation selbsttätig ausgetaucht werden können.

Das Gerät bzw. die Anordnung kann ein Personenidentifikationsmittel umfassen und dazu eingerichtet sein, bei Detektion einer Person umgehend auch eine Personenidentifikation unter Verwendung von Daten einer Personendatenbank durchzuführen. Bei Verwendung eines Mobilteils, wie weiter oben vorgeschlagen, kann die Personenidentifikation sogleich basierend auf einer WLAN/Bluetooth-Verbindung zwischen Gerät und Mobilteil erfolgen, indem beispielsweise eine Datenverbindung zwischen Gerät bzw. Anordnung und Mobilteil wie zuvor beschrieben aufgebaut wird, mittels derer das Gerät bzw. die Anordnung vom Mobilteil benutzerspezifische Daten oder Mobilteilspezifische Daten abruft, wodurch gleichzeitig auch der Benutzer identifizierbar ist (z.B. MAC-Adresse, SIM-Card-Details, Benutzerkonto am Mobilteil und dergleichen).

Die Datenbank kann vollständig oder teilweise in das Gerät bzw. in die Anordnung integriert sein. Bei vollständiger Integration befinden sich sämtliche Benutzerdaten im Gerät bzw. innerhalb der Anordnung, bei teilweiser Integration greift das Gerät bzw. die Anordnung, beispielweise mittels der oben genannten Sende-/Empfangseinrichtung oder einer separaten Netzwerkanbindung per Funk (WLAN, Bluetooth) oder drahtgebunden auf eine externe Datenbank zu (z.B. Server im Firmennetzwerk, angeschlossen an Mitarbeiterdatenbank). Die Daten einer integrierten Lösung können auch aus einem Initialen oder regelmäßigen Zugriff auf eine externe Datenbank stammen, wobei die interne Datenbank in bestimmten Abständen mittels der externen Datenbank aktualisiert wird.

Mittels des vom Gerät bzw. der Anordnung umfassten Personen-Detektionsmittels ist es möglich, dass eine vom Gerät bzw. eine von der Anordnung umfasste Leseeinheit erst dann aktiv geschaltet wird, wenn sich dem Gerät bzw. der Anordnung tatsächlich auch eine Person nähert. Bis dahin kann sich die Leseeinrichtung einem Betriebsbereitschaftsmodus befinden, in dem nur ein Bereitschaftsstrom anfällt, welcher einen Bruchteil des im Betrieb anfallenden Stromes darstellt. In dem Moment, in dem sich eine Person dem Gerät bzw. der Anordnung nähert, schlägt das Personen-Detektionsmittel an und schaltet die Leseeinrichtung vom zuvor genannten Betriebsbereitschaftsmodus in einen ersten Betriebszustand, während dessen die Leseeinrichtung bereit ist benutzerspezifische Daten entgegenzunehmen (Transponderdaten, manuelle Eingaben, Datenaustausch via Bluetooth/WLAN-Direktverbindungen etc.).

Das Gerät bzw. die Anordnung kann derart eingerichtet sein, dass bei Detektion einer Person zunächst das erste Sende-/Empfangsmittel in Betrieb genommen wird, um eine Kommunikationsverbindung mit der Person aufzubauen, welche detektiert wurde und welche sich vorzugsweise auch noch im Funkfeld des ersten Sende-/Empfangsmittels aufhält. Das Funkfeld könnte auf einem Nahfeld- oder Fernfeld basieren (UHF/VHF), wie es beispielsweise bei RFID-Anwendungen üblich ist oder wie oben schon erwähnt basierend auf WLAN/Bluetooth etc..

Um den gewünschten oder möglichen Funkfeldradius abzugrenzen, kann die zuvor erläuterte Abstandsermittlung entsprechend konfiguriert werden. Auch könnte das Gerät einen Betriebsmodus erst dann wechseln, wenn eine Person in einem bestimmten Abstand zum Gerät erkannt wurde und gleichzeitig auch eine Kommunikationsverbindung zu einem von der Person mitgeführten Zugangsmittel hergestellt werden konnte. In diesem Falle ist die Wahrscheinlichkeit sehr hoch, dass die detektierte Person ein potentieller und verifizierter Gerätebenutzer ist und eine Änderung des Betriebsmodus auch tatsächlich angebracht ist, z.B. aufwecken aus einem Sleep-Modus, Booten des Betriebssystems.

Eine solche Maßnahme kann auch oder zusätzlich die Aktivierung eines personenbezogenen Gerätebetriebszustandes oder eine personenbezogene Gerätekonfiguration sein, welche unter Berücksichtigung des Ergebnisses der Personenidentifikation selbsttätig vom Gerät bzw. der Anordnung durchgeführt wird. Diese Vorgänge können bereits abgeschlossen sein, wenn der Benutzer das Gerät verwendet will, da sie bereits im Gange sind, während sich der Benutzer dem Gerät annähert. Der Benutzer kann nach einer erfolgreichen Personenerkennung und Personenidentifikation mit einer für den Benutzer spezifischen Gerätekonfiguration das Gerät benutzen, ohne dass der Benutzer selbst irgendwelche Konfigurationen am Gerät vornehmen muss.

Beendet der Benutzer die Arbeit mit dem Gerät bzw. der Anordnung, so können auf einem Speicher des vom Benutzer mitgeführten Zugangsmittels (Transponder/Mobilteil) selbsttätig von dem Gerät bzw. der Anordnung benutzerspezifische Daten abgelegt werden, wie beispielsweise Informationen zu den zuletzt ausgeführten Arbeiten oder die aktuellen benutzerspezifischen Geräteeinstellungen. Nähert sich der Benutzer beim nächsten Mal diesem Gerät bzw. der Anordnung, so kann er dort fortfahren, wo er die Arbeiten unterbrochen hat, weil sich das Gerät bei seiner Annäherung bereits selbsttätig in denselben Betriebszustand versetzt hat, welcher beim Beenden der Arbeiten vorherrschte. Da gerade in der Automatisierungstechnik ein Gerät von vielen Benutzern verwendet wird, kann dieser Lösungsvorschlag zu massiven Zeiteinsparungen führen.

Das Gerät bzw. die Anordnung kann anhand der Benutzerdaten beispielsweise auch erkennen, welche Art von Benutzer sich dem Gerät nähert. Nähert sich ein reiner Geräteverwender zur Durchführung von Arbeitsprozessen, so kann sich das Gerät selbsttätig für einen Arbeitsprozess konfigurieren. Nähert sich dagegen eine Person, welche üblicherweise für die Instanthaltung des Geräts bzw. der Anordnung zuständig ist, so kann sich das Gerät bzw. die Anordnung selbsttätig in den Instanthaltungsmodus versetzen, noch bevor der Benutzer das Gerät bzw. die Anordnung erreicht hat.

Selbstverständlich sind weitere hier nicht explizit erwähnte Anwendungsmöglichkeiten der Erfindung denkbar. Die Erfindung erfasst sämtliche Geräte oder Anordnungen, bei denen selbsttätig eine Personenerkennung und/oder eine Personenidentifikation durchgeführt wird. Beispielhafte jedoch nicht abschließende Auflistung für Geräte oder Anordnungen: (Industrie-) PC, ein Mobiltelefon, ein Schraubgerät, ein Nietgerät, eine Schweißsteuerung, ein Stanzgerät, ein Versorgungsmodul mit/ohne Regelmodul zur Versorgung und/oder Regelung eines Synchronmotors, eine Steuerung, beispielsweise SPS oder CNC, eine hydraulische Komponente mit integrierter Elektronik, eine pneumatische Komponente mit integrierter Elektronik, wie beispielsweise Ventil, Pumpe, Speicher, Steuergerät, Sensor, Feldgerät und dergleichen sowie Akku-Varianten dieser zuvor genannten Geräte bzw. Anordnungen.

Alle diese Geräte haben gemeinsam, dass sie benutzerspezifisch konfigurierbar sind. Demzufolge greifen die erfindungsgemäßen Vorteile bei allen diesen Geräten.

Die Aufgabe wird ebenso mittels des beanspruchten Verfahrens gelöst. Die Vorteile, welche sich auch aus dem beanspruchten Verfahren ergeben, sind im Wesentlichen bereits weiter oben bei der Erläuterung des erfindungsgemäßen Geräts bzw. der Anordnung genannt.

Die Vorteile und Ausgestaltungen der Erfindung ergeben sich aus der Beschreibung und den Zeichnungen. Die Erfindung ist anhand von Ausführungsbeispielen in den Zeichnungen schematisch dargestellt und wird im Folgenden unter Bezugnahme auf die Zeichnungen weiter beschrieben.

Es zeigen:
Fig. 1 eine schematische und stark vereinfachte Ansicht einer erfindungsgemäßen Anordnung bzw. Geräts gemäß einem ersten Ausführungsbeispiel;
Fig. 2 ein Flussdiagramm eines Verfahrens zum Verwenden/Betreiben der Anordnung bzw. des Geräts für eine Automatisierungsanlage gemäß dem ersten Ausführungsbeispiel;
Fig. 3 eine schematische und stark vereinfachte Ansicht eines erfindungsgemäßen Geräts gemäß einem zweiten Ausführungsbeispiel;
Fig. 4 eine schematische und stark vereinfachte Ansicht eines erfindungsgemäßen Geräts gemäß einem dritten Ausführungsbeispiel;

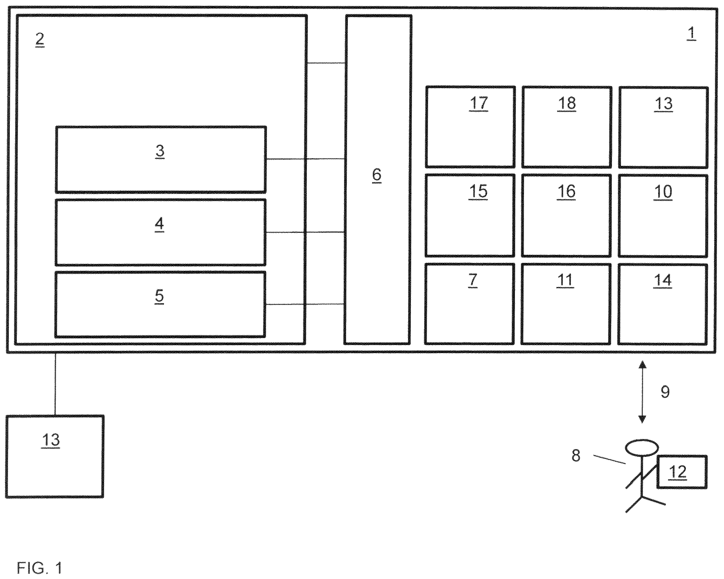

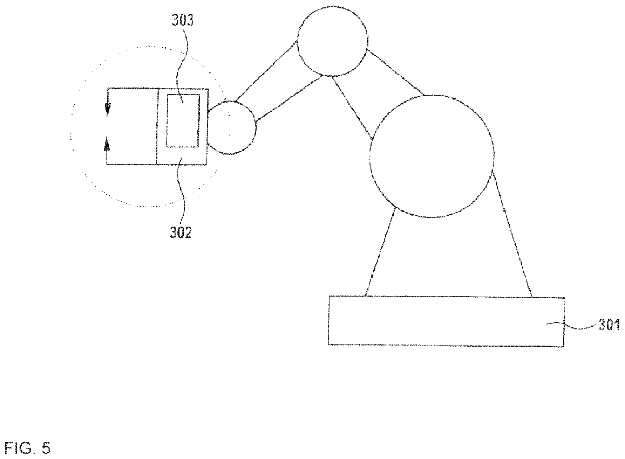

Fig. 5 eine schematische und stark vereinfachte Ansicht eines erfindungsgemäßen Geräts gemäß einem vierten Ausführungsbeispiel; Fig. 1 zeigt schematisch einen Teil einer Anordnung gemäß einem ersten Ausführungsbeispiel. Die Anordnung umfasst ein Gerät 1, weitere ähnliche oder identische Geräte 1 können ebenfalls umfasst sein. Das Gerät 1 kann einen Prozessschritt innerhalb eines Automatisierungsprozesses durchführen, beispielweise ein Werkstück (nicht gezeigt) bearbeiten. Das Werkstück kann ein einzelnes Bauteil sein oder auch bereits mehrere zusammengefügte Bauteile umfassen. Insbesondere kann das Werkstück wieder ein Gerät oder Produkt sein. Das Gerät 1 kann ein Maschinenteil bzw. ein Geräteteil 2, eine Geräteprozesssteuereinrichtung 15, ein Authentifizierungs- und Zugangsteil 16 mit einer Leseeinrichtung 17, eine Datenbank 13 und eine Anzeigeeinrichtung 18 umfassen. Die Geräteprozesssteuereinrichtung 15 ermöglicht ein autarkes Verwenden des Geräts 1 innerhalb eines komplexeren Automatisierungsprozesses oder einer komplexeren Anordnung, ohne dass eine übergeordnete Steuereinrichtung (nicht gezeigt) erforderlich wäre.

Das Gerät 1 kann auch mehrere Gerätefunktionen 3, 4, 5 umfassen und zumindest ein Gerätefunktionswahlmittel 6, zur Auswahl zumindest einer der Gerätefunktionen 3, 4, 5. Weiter ist ein Detektionsmittel 7, zur Detektion zumindest einer Person 8 im Umfeld des Geräts 1 umfasst, mittels dessen zunächst unabhängig von einer Personenidentifikation zunächst die Anwesenheit einer Person detektiert werden kann. Das Gerät 1 ist erfindungsgemäß derart eingerichtet, dass beim Detektieren der Person 8 mittels des Detektionsmittels 7 eine der Gerätefunktionen 3, 4, 5 selbsttätig mittels des Gerätefunktionswahlmittels 6 vom Gerät 1 oder einer vom Gerät umfassten Steuereinrichtung (nicht gezeigt) ausgewählt wird.

Der Automatisierungsprozess kann beispielsweise mittels einer Automatisierungsanlage in Form einer Fertigungsanlage zur Fertigung von Produkten, wie beispielsweise Fahrzeuge, Möbel, usw. realisiert sein. Das erste Gerät 1 kann ein Schraubgerät und/oder ein Nietgerät und/oder ein Stanzgerät und/oder ein Schweißgerät und dergleichen sein. Das erste Gerät 1 kann jedoch auch ein spanabhebendes Gerät 1, ganz allgemein ein beliebiges Elektro-Gerät, insbesondere Elektro-Werkzeug, mit Benutzeridentifikation sein. Allgemein auch ein erstes Gerät 1 zum Bearbeiten eines Werkstückes oder zur Durchführung von Arbeiten an einem Werkstück oder auch zur Positionierung (z.B. elektrischer Antrieb) eines Werkstückes. Demzufolge kann das erste Gerät 1 und gegebenenfalls auch weitere Geräte 1 ein Werkzeug mit beispielsweise einem motorischen Abtrieb sein. Das Gerät 1 kann jedoch auch beispielsweise ein Roboter, eine Transporteinrichtung oder ähnliches sein, welche ebenfalls bei einem von der Automatisierungsanlage auszuführenden Prozess eingesetzt werden kann. Das erste Gerät 1 kann mittels einer Steuereinrichtung oder einer nicht dargestellten übergeordneten Steuereinrichtung gesteuert werden.

Neben den zuvor genannten ersten Geräten 1 kommen als Gerät 1 auch in Frage hydraulische oder pneumatische Komponenten für Automatisierungszwecke mit integrierter Elektronik, wie Ventile, Pumpen, Speicher, aber auch Steuergeräte und Sensoren bzw. Feldgeräte für Komponenten der Automatisierungstechnik.

Die benannten ersten Geräte 1 können alle gleichsam von einem definierten Benutzer 8 benutzt werden. Um die Berechtigung des Benutzers 8 zur Verwendung des Geräts 1 zu prüfen, verfügt der Benutzer 8 über ein Zugangsberechtigungsmittel 12, wie beispielsweise einen Betriebsausweis oder eine entsprechende Benutzerkarte, elektronische Schlüssel, Mobilteil mit/ohne Telefonfunktionalität und dergleichen. Auf dem Zugangsberechtigungsmittel 12 können Daten gespeichert sein oder es kann Eigenschaften aufweisen, welche zur Authentifizierung des Benutzers 8 zur Verwendung des Geräts 1 erforderlich sein können.

Das Maschinenteil/Geräteteil 2 kann beispielsweise einen von der Automatisierungsanlage auszuführenden (Teil-) Prozess ausführen. Die Steuereinrichtung 15 steuert die Ausführung des (Teil-) Prozesses. Ein solcher Prozess kann beispielsweise ein Einschrauben einer Schraube, ein Setzen eines Niets, ein Stanzen eines Blechs, ein Schweißen einer Schweißnaht oder eines Schweißpunktes, das Anfahren einer Position oder das Erzeugen und Steuern eines hydraulischen Volumenstromes mittels Ventilen, Pumpen und dergleichen umfassen. In der Pneumatik wäre mittels vergleichbarer Komponenten (Ventile, Kompressoren, Drosseln) der Luftstrom beeinflussbar.

Das Personenidentifikationsmittel 14 dient zum Authentifizieren des Benutzers 8. Hierfür muss der Benutzer 8 das Zugangsberechtigungsmittel 12 mit sich führen. Das Personenidentifikationsmittel 14 prüft, ob der Benutzer 8 zur Benutzung des Geräts 1 und damit zur Verwendung der Funktionen des Maschinenteils/Geräteteils 2 berechtigt ist.

Die Leseeinrichtung 17 und das Personenidentifikationsmittel 12 des Benutzers 8 können derart ausgestaltet sein, dass die Leseeinrichtung 17 Daten an das Personenidentifikationsmittel 14 übermittelt, welche sie zuvor von dem Zugangsberechtigungsmittel 12 empfangen hat. Die Leseeinrichtung 17 kann auch als Scanner ausgebildet sein, welche das Umfeld des Geräts bzw. der Anordnung nach Zugangsberechtigungsmitteln 12 scannt und diese selbsttätig erkennt.

Der Benutzer 8 kann als das Zugangsberechtigungsmittel 12 entweder seinen Werksausweis oder eine weitere Zugangskarte, beispielsweise eine Smartcard, Scheckkarte, usw. verwenden, sofern diese einen Transponder umfasst. Weisen die Daten darauf hin, dass der Benutzer 8 zur Verwendung der Funktionen des Maschinenteils berechtigt ist, schaltet die Anordnung 1 bzw. das Gerät 1 die für den Benutzer 8 zulässigen Funktionen des Geräts 1 frei. Insbesondere kann der Benutzer 8 dadurch berechtigt werden, einem mit dem Maschinenteil 2 ausführbaren Prozess einer Automatisierungsanlage auszuführen. Ein anderer Benutzer 8 kann berechtigt werden, das Gerät 1 zu konfigurieren, beispielsweise bei einer Neuinstallation oder zur Änderung der Funktionen des Geräts 1. Noch ein weiterer Benutzer 8 kann beispielsweise berechtigt werden, das Gerät 1 zu warten. Es sind jedoch auch andere Konfigurationen für die Einteilung der Berechtigungsgruppen oder Berechtigungsstufen möglich.

Das Gerät 1 bzw. die Anordnung überwacht erfindungsgemäß das Geräteumfeld zum Zwecke der Detektion einer Person 8 im Umfeld des Geräts 1 und wählt selbsttätig, d.h. ohne externe Mittel oder Benutzereigaben, eine Gerätefunktion bei Detektion der Person 8 aus und gereift anschließend auf personenbezogenen Daten zu und führt eine Personenidentifikation unter Verwendung einer Personendatenbank 13 durch. Die Benutzerdaten können auf einem Zugangsberechtigungsmittel 12 abgespeichert sein, das der Benutzer mit sich führt. Als Zugangsberechtigungsmittel kommt neben den bereits genannten Varianten auch ein Mobilgerät (Smart Phone, Tablet PC mit/ohne Telefonfunktionalität) in Frage, welches mittels einer Funkverbindung kontaktiert wird und wobei mittels dieser Funkverbindung benutzerspezifische Informationen, welche auf dem Mobilgerät des Benutzers gespeichert sind, vom Mobilgerät abgerufen und zur Personenidentifikation genutzt werden.

Eine solche Konfiguration gemäß dem vorliegenden Ausführungsbeispiel hat den Vorteil, dass der Benutzer 8 bereits bei Annäherung an das Gerät 1 mit den ihm zugeordneten Benutzungsrechten für das Gerät 1 freigeschaltet ist und es keiner weiteren Aktivität von Seiten des Benutzers 8 bedarf. Somit kann der Benutzer 8 sofort mit seiner Arbeit mit dem Gerät 1 beginnen.

Dadurch ist keinerlei Zeitverzug beim Arbeiten mit dem Gerät 1 vorhanden, auch wenn hohe Sicherheitsbestimmungen bei einer Arbeit mit dem Gerät 1 erfüllt werden müssen.

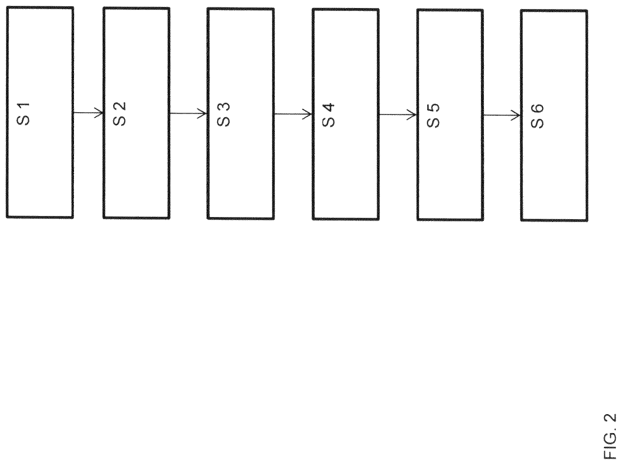

Figur 2 zeigt das erfindungsgemäße Verfahren zum Betrieb bzw. zur Verwendung des Geräts bzw. der Anordnung.

Das Verfahren umfasst als wesentliche Aspekte die Überwachung des Geräteumfeldes zum Zwecke der Detektion S1 einer Person 8 im Umfeld des Geräts 1 und die selbsttätige Auswahl einer Gerätefunktion S2 bei Detektion der Person 8, vorzugsweise mit anschließendem Zugriff S3 auf personenbezogenen Daten und Durchführung einer Personenidentifikation unter Verwendung einer internen oder externen Personendatenbank 13.

Vorteilhafterweise beendet das Gerät 1 bei Detektion einer Person 8 eine erste Gerätefunktion 3, 4, 5, z.B. einen Sleep - Modus und eine startet S4 ohne zusätzliche äußere Maßnahmen und damit selbsttätig eine zweite Gerätefunktion 3, 4, 5, beispielsweise eine Benutzeridentifikationsfunktion 3, 4, 5. Besonders vorteilhaft ist die Variante der Erfindung, welche als erste Gerätefunktion 3, 4, 5 den Sleep-Modus umfasst, bei dem im Wesentlichen lediglich die Personendetektion aktiv ist, wobei eine ggf. vorhandene Gerätesteuerung mit/ohne Peripherie sowie eine ggf. auf dieser Steuerung ablaufende Firmware mit/ohne Betriebssystem inaktiv ist und damit keinen Strom verbraucht. Besonders bei Akku-Geräten ist dies vorteilhaft.

Beispielsweise könnte bei Personendetektion auch zunächst eine Bootphase eingeleitet werden und anschließend mittels eines nichtflüchtigen Speichers, in dem der vor dem Sleep-Modus vorherrschende Gerätezustand abgespeichert wurde, der vorherige Gerätezustand wiederhergestellt werden.

Eine Benutzeridentifikation kann dadurch erfolgen, dass das Gerät 1 drahtlos Daten mit einem von der detektierten Person 8 mitgeführten Zugangsberechtigungsmittel 12 zur Personenidentifikation selbsttätig austauscht S5. Das Zugangsberechtigungsmittel 12 kann ein Mobilgerät sein, wobei Daten mittels WLAN und/oder Bluetooth zur Benutzeridentifikation ausgetauscht werden und das Gerät 1 anschließend optional auch einen personenbezogenen Gerätebetriebszustand oder eine personenbezogene Gerätekonfiguration selbsttätig herstellt S6.

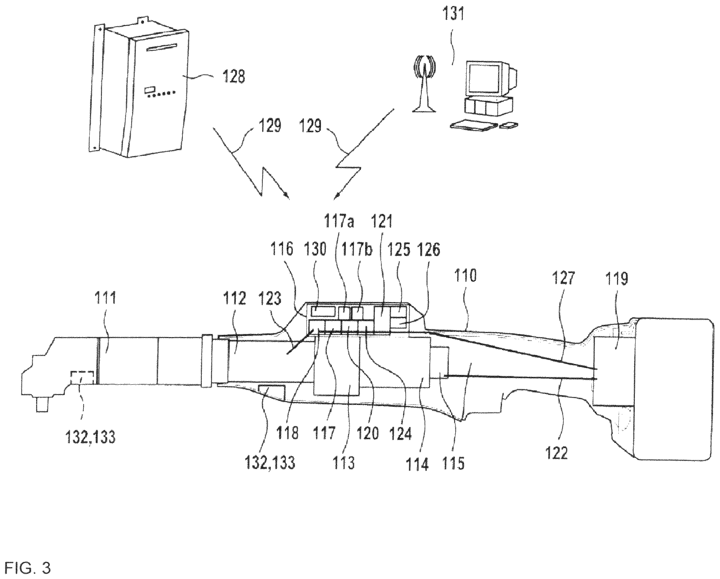

Fig. 3 zeigt als Beispiel für ein in Fig. 1 und Fig. 2 beschriebenes Gerät 1 ein Schraubgerät, welches zur Durchführung von Schraubaufgaben dient und als Akku-Handschrauber ausgebildet sein kann. Das Gerätegehäuse 110 umfasst mindestens einen Abtrieb 111 als Geräteteil bzw. Maschinenteil, ein Getriebe 113 und einen Motor 114 und vorzugsweise noch einen Drehmomentaufnehmer 112 und einen Rotorlagegeber 115. Der Abtrieb 111 ist mittels des Motors 114 und unter Verwendung des Getriebes 113 antreibbar. Von dem Gehäuse 110 des Schraubers ist ein integriertes Schraubprozesssteuermittel 116 zur Durchführung eines in sich vollständig abgeschlossenen Schraubprozesses umfasst.

Der Schrauber ist zumindest zeitweise autark und unabhängig von einer übergeordneten Schraubprozesssteuerung 131 betreibbar, mittels des internen Steuermittels 116. Der Schrauber 1 kann mit der übergeordneten Schraubprozesssteuerung 131 oder auch mit anderen Einrichtungen 128 per Funk 129 (z.B. Access-Point/Router) kommunizieren sowie Daten mit diesen Einrichtungen 131, 128 austauschen (Schraubprogramm, Ergebnisdaten und dergleichen). Das Schraubprozesssteuermittel 116 umfasst als Komponenten mindestens einen Mikroprozessor 117 mit Speicher 117a oder eine Speicheraufnahmevorrichtung 117b und vorzugsweise zusätzlich ein Messmodul 118 und einen Servoverstärker 119. Der Eingang des Messmoduls 118 ist mit dem Ausgang des Drehmomentaufnehmers 112 verbunden 123. Der Servoverstärker 119 ist mit dem Rotorlagegeber 115, mittels einer Verbindung 122 und mit dem Messmodul 118 mittels einer weiteren, separaten Verbindung 127 verbunden. Die Verbindung 127 ist ein Datenbus, welcher eine Querkommunikation zwischen den Komponenten 117, 118, 119, 120 ermöglicht.

Bei dem Schrauber kann der Motor 114 unter Berücksichtigung der Rotorlage und der Ausgangsdaten des Drehmomentaufnehmers 112 mittels eines vom Mikroprozessor 117 ausführbaren Schraubprogramms gesteuert werden. Der Mikroprozessor 117 liest das Schraubprogramm aus dem Speicher 117a oder aus einer in die Speicheraufnahmevorrichtung 117b eingefügten Flash-Speicherkarte aus. Eingabe-/Ausgabeeinheiten 120 als weitere umfasste Komponenten realisieren eine Mensch-Maschine-Schnittstelle (z.B. zwischen Schrauber und Bediener, wie beispielsweise dem zuvor beschriebenen Benutzer, durch Tastatur und Display) und/oder eine Maschine-Maschine-Schnittstelle (z.B. zwischen Schrauber und PC durch Datenschnittstellen) vorzugsweise mit Visualisierung von für den Schraubprozess relevanten Daten (z. B. mittels eines Farbdisplays 124) für den Bediener.

Nahe am Abtrieb 111 oder unmittelbar am Abtrieb 111 kann optional ein Bilderfassungsmittel 132 angeordnet sein oder kann eine Anordnung 133 zur mechanischen beziehungsweise elektrischen Anbindung eines zuvor genannten Bilderfassungsmittels 132 vorgesehen sein. Das Schraubprozesssteuermittel 116 kann in diesem Falle gleichzeitig die Funktion der Bildverarbeitung/Bildanalyse 130 übernehmen.

Dieses Gerätebeispiel umfasst alle nötigen Details zur Realisierung von sicherheitskritischen Verschraubungen wie Ergebnis-Speicherung, Ergebnisausgabe und Ergebnisdokumentation. Ein integrierter Sender 121 kann die Verschraubungsdaten per Funk 129 an eine Empfangsstation 128, 131 beispielsweise unter Einbindung eines Access-Points übertragen. Bei einem auftretenden kurzzeitigen Funkschatten puffert die integrierte Elektronik die Daten im Schrauber und gibt sie weiter, sobald wieder eine Funkverbindung 129 besteht. Das gewährleistet eine 100%-Dokumentation aller Vorgänge und sorgt für eine hohe Verfügbarkeit und trägt entscheidend zur Prozesssicherheit bei.

Eine bei dem Schrauber komplett integrierte Steuerungs- und Leistungselektronik hebt die Aufteilung auf mehrere, über Leistungs- und Kommunikationskabel verbundene, einzelne Komponenten quasi auf. Zur Parametrierung und Werker- bzw. Bediener- bzw. Benutzerinformation an dem Schrauber steht ein Farbdisplay 124 zur Verfügung. Eine integrierte lichtstarke LED sorgt auch bei wechselnden Lichtverhältnissen stets für eine optimale Ausleuchtung der Schraubstelle. Aus der farblichen Hinterlegung der Displayanzeige (z. B. rot/grün) kann man auf das Ergebnis der gerade von der Spindel hergestellten Schraubverbindung schließen. Mit der Erfindung werden Drehmomente bis 50 Nm erreicht und Lithium-Ionen-Akkus sorgen für einen sicheren Betrieb. Am Display 124 können auch die vom Bilderfassungsmittel 132, 133 generierten Bildinformationen und die von dem Schraubprozesssteuermittel 116 oder einer übergeordneten Einrichtung 128, 131 zur Verfügung gestellten Zusatzbildinformationen eingeblendet werden. Optionale Audiovorrichtungen (Mikrofoneingang, Lautsprecherausgang beziehungsweise Mikrofon oder Lautsprecher) 126 und/oder ein Bluetoothmodul 125 zur Audiodatenübertragung können die akustische Anbindung des Bedieners des Arbeitsgerätes an eine übergeordnete Einrichtung 128, 131 sicherstellen.

Zusätzlich sind von diesem Schraubgerät die erfindungsgemäßen Merkmale, wie in den Patentansprüchen offenbart, zumindest teilweise umfasst, wie beispielsweise eine Personendetektionsmittel, ein Gerätefunktionswahlmittel und vorzugsweise ein Personen-Authentifizierungs- und/oder Zugangsmittel, welches erfindungsgemäß einen Benutzerzugang koordiniert. Mittel zur Realisierung der in den Patentansprüchen offenbarten Verfahrensschritte sind ebenfalls zumindest teilweise umfasst und mittels des Schraubprozesssteuermittels 116 zumindest teilweise implementiert.

Das Schraubgerät kann je nach Anwendung auch ohne Bilderfassung/Audioübertragung usw. ausgebildet sein, ebenso können auch genannte Gerätemerkmale weggelassen oder durch hier nicht genannte Merkmale ersetzt werden, solange die dem Gerät zugedachte Aufgabe noch mittels der verbleibenden Merkmale gelöst wird, nämlich nach selbsttätiger Detektion und Identifikation eines Benutzers diesem Zugriff zu Schraubgerätefunktionen zu ermöglichen, so dass er Schraubaufgaben erledigen kann.

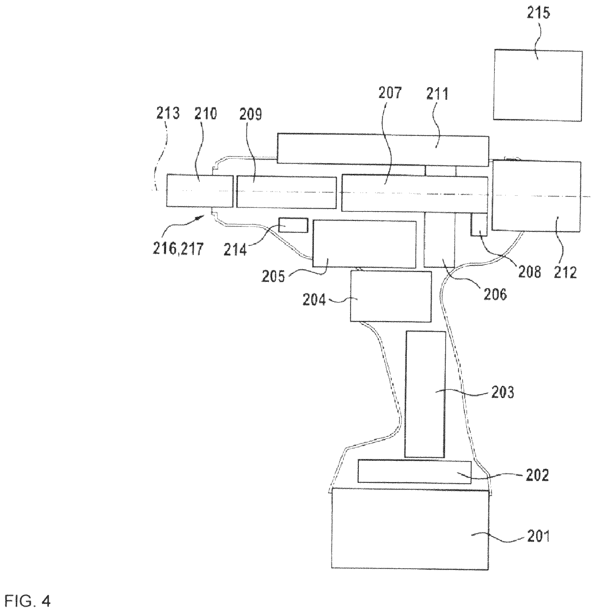

Das Gerät gemäß Figur 4 repräsentiert ein weiteres Ausführungsbeispiel für das zuvor in Bezug auf Fig. 1 bis Fig. 2 beschriebene Gerät 1 und dient zur Durchführung von Einpressarbeiten. Es ist als Nietgerät bzw. als Nietsetzgerät konzipiert, welches zum Setzen von aus einer Niethülse und einem abreißbaren Nietdorn bestehenden Blindnieten oder Blindmuttern dient. Es handelt sich um ein Akkugerät für den Handbetrieb. Vorgesehen ist ein Gerätekopf 210 mit Mundstück zum Halten des Nietdorns. Entlang derselben Achse 213 sind angrenzend zueinander der Gerätekopf 210 und/oder ein Kraftsensor mit Nietdorndurchführung 209 und/oder eine Trapez- oder Kugelumlaufspindel 207 mit Nietdorndurchführung und/oder vorzugsweise ein Nietdornbehälter 212 angeordnet. Der während der Montage vom Mundstück gehaltene Nietdorn kann somit nach dessen Abriss durch die zuvor genannten Komponenten 210, 209, 207 hindurch bis zum Nietdornbehälter 212 geführt werden. Die Trapez- oder Kugelumlaufspindel 207 wird mittels eines Elektromotors 205, vorzugsweise in Verbindung mit einem Getriebe 206, ggf. mit Versatz, angetrieben. An der Trapez- oder Kugelumlaufspindel 207 ist ein Wegesensor 208 angeordnet, welcher den von der Trapez- oder Kugelumlaufspindel 207 zurückgelegten Weg direkt oder indirekt, mittels des von der Trapez- oder Kugelumlaufspindel 207 zurückgelegten Drehwinkels, erfassen kann. Alternativ könnte der Wegesensor 208 auch am Motor 205 angeordnet sein. Bezugszeichen 211 kennzeichnet eine Steuerelektronik mit Kommunikationsmodul und Display, welche zumindest teilweise auch vom Gehäuse umfasst sein kann. Der Nietdornbehälter 212 kann auch zumindest teilweise nur vom Gehäuse umfasst sein.

Elektrisch versorgt wird die Anordnung mittels eines Akkus 201, dazu ist ein Kabelbaum 203 vorgesehen. Zum Ein- und Ausschalten dient der Startschalter 204. Bezugszeichen 202 kennzeichnet die Schnittstelle zwischen Akku und Leistungselektronik zur Ansteuerung des Motors 205. Zumindest die Komponenten 202, 203, 205, 206, 207, 208, 209 sind vollständig vom Gehäuse des Nietsetzgerätes umschlossen, vorzugsweise auch noch die Komponente 211. Die Steuerelektronik 211 ist mit einem Datenspeicher ausgestattet und derart mit den Sensoren 208, 209 verbunden, dass diese die von den Sensoren 208, 209 während eines Setzvorgangs kontinuierlich gelieferte Datenmenge im Datenspeicher speichern und/oder auswerten kann.

Vorzugsweise umfasst das Nietsetzgerät ein Funkmodul 214, vorzugsweise ein WLAN-Modul und/oder Mobilfunk-Modul (GSM/G3/G4), zur drahtlosen Übertragung von Prozessdaten oder abgespeicherten Daten an eine übergeordnete Steuerung 215. Beide Module könnten auch alternierend beispielsweise abhängig von der Signalqualität und der Anbindung an Datennetze aktiviert werden. Unter Prozessdaten werden kontinuierliche Datenströme verstanden, welche während des Setzvorganges von Blindnieten oder Blindnietmuttern mittels der Kraft- und Wegsensorik erzeugt werden und damit für einen spezifischen Setzvorganges charakteristischen Daten darstellen, welche unter anderem eine Qualitätsanalyse zulasssen (Kraft-Weg-Daten). Eine solche Qualitätsanalyse kann unter Heranziehung von Referenzdatensätzen (Kraft-Weg-Daten) entweder mittels der internen Steuerelektronik 211 und/oder mittels einer übergeordneten Einrichtung 215 durchgeführt werden. Dasselbe gilt für die Bildverarbeitung und die damit verbundenen Bilddaten.

Im Display der integrierten Geräte-Steuerelektronik 211 können somit neben einer reinen OK/NOK - Information (NOK = Nicht OK) an den Benutzer auch Kraft-Weg-Kurven oder darauf bezogene Analyseergebnisse angezeigt werden. Die übergeordnete Einrichtung 215 bedient sich hierzu eines externen Displays. Derartige Analysen erlauben es dann die Kraft-Weg-Diagramme einer jeden einzelnen Nietverbindung, welche innerhalb einer Fertigungslinie realisiert wurde, zu bewerten.

Von dem Nietsetzgerät kann ein Bilderfassungsmittel 216 oder eine Anordnung 217 zur mechanischen beziehungsweise elektrischen Anbindung eines Bilderfassungsmittels 216 umfasst sein. Die Steuerelektronik 211 kann in diesem Falle gleichzeitig die Funktion der Bildverarbeitung/Bildanalyse übernehmen, alternativ wird dies von der übergeordneten Einrichtung 215 erledigt, welche mittels Funk mit dem Nietsetzgerät kommunizieren kann.

Zusätzlich sind von diesem Nietgerät die erfindungsgemäßen Merkmale, wie in den Patentansprüchen offenbart, zumindest teilweise umfasst, wie beispielsweise eine Personendetektionsmittel, ein Gerätefunktionswahlmittel und vorzugsweise ein Personen-Authentifizierungs- und/oder Zugangsmittel, welches erfindungsgemäß einen Benutzerzugang koordiniert. Mittel zur Realisierung der in den Patentansprüchen offenbarten Verfahrensschritte sind ebenfalls zumindest teilweise umfasst und mittels des Nietprozesssteuermittels 211 zumindest teilweise implementiert.

Das Nietgerät kann je nach Anwendung auch ohne Bilderfassung/Audioübertragung usw. ausgebildet sein, ebenso können auch genannten Gerätemerkmale weggelassen oder durch hier nicht genannte Merkmale ersetzt werden, solange die dem Gerät zugedachte Aufgabe noch mittels der verbleibenden Merkmale gelöst wird.

Das Gerät gemäß Figur 5, das ein weiteres Beispiel für das zuvor in Bezug auf Fig. 1 bis Fig. 2 beschriebene Gerät 1 ist, ist ein Schweißgerät 301 und dient zur Erstellung einer Schweißverbindung mittels einer Schweißzange 302. Ein Bilderfassungsmittel 303 oder eine entsprechende Aufnahmevorrichtung für ein derartiges Bilderfassungsmittel 303 kann in die Schweißzange 302 integriert sein, welche am schwenkbaren Arm des Roboters gelenkig gelagert ist und alle Bewegung des Armes mitmacht. Die Schweißsteuerung (nicht gezeigt) kann das Bildverarbeitungsmittel umfassen.

Das Schweißgerät kann je nach Anwendung auch ohne Bilderfassung/Audioübertragung usw. ausgebildet sein, ebenso können auch weiter oben genannten Gerätemerkmale weggelassen oder durch nicht genannte Merkmale ersetzt werden, solange die dem Gerät zugedachte Aufgabe noch mittels der verbleibenden Merkmale gelöst wird.

Zusätzlich sind von diesem Schweißgerät die erfindungsgemäßen Merkmale, wie in den Patentansprüchen offenbart, zumindest teilweise umfasst, wie beispielsweise eine Personendetektionsmittel, ein Gerätefunktionswahlmittel und vorzugsweise ein Personen-Authentifizierungs- und/oder Zugangsmittel, welches erfindungsgemäß einen Benutzerzugang koordiniert. Mittel zur Realisierung der in den Patentansprüchen offenbarten Verfahrensschritte sind ebenfalls zumindest teilweise umfasst und mittels des Schweißprozesssteuermittels (nicht gezeigt) zumindest teilweise implementiert.

Die in allen Figuren dargestellten Teile sind schematisch dargestellt und können in der genauen Ausgestaltung von den in den Figuren gezeigten Formen abweichen, solange deren zuvor beschriebenen Funktionen gewährleistet sind. Als Alternative kann das Personendetektionsmittel und/oder das Gerätefunktionswahlmittel auch außerhalb des Gerätes angeordnet sein und mit dem Gerät in (Funk-) Verbindung stehen.

Beispielsweise kann ein funkbasierter Bewegungsmelder innerhalb einer Arbeitszelle angeordnet sein, wobei dieser dem Gerät per Funk ein Signal sendet, sobald sich eine Person im Detektionsbereich aufhält. Die Gerätefunktionswahl könnte mittels einer externen Steuerung realisiert sein, welche ebenfalls mit dem Gerät kommunizieren kann und auf Gerätefunktionen zugreifen kann. Zweckmäßigerweise sind die Komponenten der beanspruchten Anordnung jedoch vollständig oder zumindest überwiegend vom Gerät selbst umfasst.

## Patentansprüche

1. Gerät (1), insbesondere Schraubgerät oder Nietgerät oder Schweißgerät oder Antriebsregelgerät, umfassend zumindest ein Geräteteil (2) eingerichtet zur Realisierung zumindest einer oder mehrerer Gerätefunktionen (3, 4, 5); zumindest ein Gerätefunktionswahlmittel (6), eingerichtet zur Auswahl zumindest einer der Gerätefunktionen (3, 4, 5); ein erstes drahtloses Sende-/Empfangsmittel eingerichtet zum drahtlosen Austauschen von Daten mit einem nicht von dem Gerät (1) umfassten zweiten drahtlosen Sende-/Empfangsmittel, und ein Personenidentifikationsmittel (14) eingerichtet zum Authentifizieren einer Person (8) als Benutzer des Geräts (1), welcher zur Verwendung von Funktionen des Geräteteils (2) berechtigt ist, **gekennzeichnet durch**
ein Detektionsmittel (7), eingerichtet zur Detektion zumindest einer Person (8) im Umfeld des Geräts (1) ohne eine manuelle Eingabe eines Benutzers an dem Gerät (1); wobei das Gerät (1) eingerichtet ist,
beim Detektieren der Person (8) mittels des Detektionsmittels (7) eine der Gerätefunktionen (3, 4, 5) mittels des Gerätefunktionswahlmittels (6) selbst auszuwählen, indem das Gerät (1) erst dann von einem Geräte-Stromsparmodus in einen Benutzeridentifikationsmodus als Betriebsmodus wechselt, wenn mit dem Detektionsmittel (7) ohne eine manuelle Eingabe an dem Gerät (1) eine Person (8) im Umfeld des Geräts (1) in einem bestimmten Abstand zum Gerät (1) erkannt wurde, und in dem Benutzeridentifikationsmodus eine Aktivierung des ersten drahtlosen Sende-/Empfangsmittels durchführt, um mittels des ersten drahtlosen Sende-/Empfangsmittels Daten zur Personenidentifikation mit dem zweiten drahtlosen Sende-/Empfangsmittel auszutauschen, und
unter Berücksichtigung eines Ergebnisses einer Personenidentifikation durch das Personenidentifikationsmittel (14) einen personenbezogenen Gerätebetriebszustand oder eine personenbezogene Gerätekonfiguration zu aktivieren, so dass sich das Gerät (1) in den personenbezogenen Gerätebetriebszustand oder eine personenbezogene Gerätekonfiguration des Benutzers versetzen kann, ohne dass der Benutzer selbst irgendwelche Konfigurationen am Gerät (1) vornehmen muss.

2. Gerät (1) gemäß Anspruch 1, mit einer Einrichtung (10) zur Personen-Abstandsermittlung, wobei das Gerät (1) derart eingerichtet ist, dass der Abstand (9) einer detektierten Person (8) zum Gerät (1) von dem Gerät (1) selbst ermittelbar ist.

3. Gerät (1) gemäß einem der vorhergehenden Ansprüche, wobei das Personenidentifikationsmittel (14) dazu eingerichtet ist, bei Detektion der Person eine Personenidentifikation unter Verwendung von Daten einer Personendatenbank (13) durchzuführen.

4. Gerät (1) gemäß Anspruch 3, wobei das Gerät (1) dazu eingerichtet ist, anhand der Benutzerdaten zu erkennen, welche Art von Benutzer sich dem Gerät (1) nähert, um den personenbezogene Gerätebetriebszustand oder eine personenbezogene Gerätekonfiguration unter Berücksichtigung des Ergebnisses der Personenidentifikation selbsttätig herzustellen.

5. Gerät (1) gemäß Anspruch 4, wobei das Gerät (1) dazu eingerichtet ist, das Gerät (1) zur Durchführung eines Arbeitsprozesses zu konfigurieren, wenn der Benutzer ein Geräteverwender ist, und wobei das Gerät (1) dazu eingerichtet ist, das Gerät (1) in einen Instanthaltungsmodus zu versetzen, wenn der Benutzer für die Instandhaltung des Geräts (1) zuständig ist.

6. Gerät (1) nach einem der vorangehenden Ansprüche, wobei das Gerät (1) dazu eingerichtet ist, auf einem Speicher eines vom Benutzer mitgeführten Zugangsmittels benutzerspezifische Daten zu den zuletzt ausgeführten Arbeiten oder den aktuellen benutzerspezifischen Geräteeinstellungen abzulegen, wenn der Benutzer seine Arbeit mit dem Gerät (1) beendet, und sich bei der nächsten Annäherung des Benutzers selbsttätig in denselben Betriebszustand zu versetzen, welcher beim Beenden der Arbeiten vorherrschte.

7. Verfahren zum Betrieb eines Geräts (1), gemäß einem der zuvor genannten Patentansprüche, mit den Schritten: Überwachung des Geräteumfeldes zum Zwecke der Detektion (S1) einer Person (8) im Umfeld des Geräts (1); Selbsttätige Auswahl einer Gerätefunktion (S2) bei Detektion der Person (8); vorzugsweise mit Zugriff (S3) auf personenbezogene Daten und Durchführung einer Personenidentifikation unter Verwendung einer Personendatenbank (13).

8. Verfahren gemäß einem der vorhergehenden Verfahrensansprüche, wobei bei Detektion einer Person (8) eine erste Gerätefunktion (3, 4, 5) beendet und eine zweite Gerätefunktion (3, 4, 5) aktiviert (S4) wird, wobei es sich bei der ersten Gerätefunktion (3, 4, 5) um eine Geräte-Stromeinsparfunktion handelt.

9. Verfahren gemäß einem der vorhergehenden Verfahrensansprüche, wobei das Gerät (1) drahtlos Daten mit einem von der detektierten Person (8) mitgeführten Zugangsberechtigungsmittel (12) zur Personenidentifikation selbsttätig austauscht (S5).

10. Verfahren gemäß einem der vorhergehenden Verfahrensansprüche, wobei das Gerät (1) anhand der Benutzerdaten erkennt, welche Art von Benutzer sich dem Gerät (1) nähert, um den personenbezogenen Gerätebetriebszustand oder eine personenbezogene Gerätekonfiguration selbst herzustellen (S6).

11. Verfahren gemäß Anspruch 10, wobei sich das Gerät (1) zur Durchführung eines Arbeitsprozesses konfiguriert, wenn der Benutzer ein Geräteverwender ist, und wobei sich das Gerät (1) in einen Instanthaltungsmodus versetzt, wenn der Benutzer für die Instandhaltung des Geräts (1) zuständig ist.

12. Gerät (1) nach einem der Ansprüche 1 bis 6 wobei das Gerät (1) auf einem Speicher eines vom Benutzer mitgeführten Zugangsmittels (12) benutzerspezifische Daten zu den zuletzt ausgeführten Arbeiten oder den aktuellen benutzerspezifischen Geräteeinstellungen ablegt, wenn der Benutzer seine Arbeit mit dem Gerät (1) beendet, und sich bei der nächsten Annäherung des Benutzers selbsttätig in denselben Betriebszustand versetzt, welcher beim Beenden der Arbeiten vorherrschte.

## Claims

1. Device (1), in particular screwing device or riveting device or welding device or drive control device, comprising at least one device part (2) configured to implement at least one or more device functions (3, 4, 5); at least one device function selection means (6) configured to select at least one of the device functions (3, 4, 5); a first wireless transmitting/receiving means configured to wirelessly interchange data with a second wireless transmitting/receiving means included in the device (1), and a person identification means (14) configured to authenticate a person (8) as a user of the device (1) who is authorized to use functions of the device part (2), **characterized by**
a detection means (7) configured to detect at least one person (8) in the environment of the device (1) without a manual input by a user on the device (1); wherein the device (1) is configured,
when the person (8) is detected by means of the detection means (7), to itself select one of the device functions (3, 4, 5) by means of the device function selection means (6) by virtue of the device (1) changing from a device power-saving mode to a user identification mode as an operating mode only when a person (8) has been detected in the environment of the device (1) at a particular distance from the device (1) using the detection means (7) without a manual input on the device (1) and, in the user identification mode, activating the first wireless transmitting/receiving means in order to interchange person identification data with the second wireless transmitting/receiving means by means of the first wireless transmitting/receiving means, and
to activate a person-related device operating state or a person-related device configuration while taking into account a result of a person identification carried out by the person identification means (14), with the result that the device (1) can change to the person-related device operating state or a person-related device configuration of the user without the user himself having to carry out any configurations on the device (1).

2. Device (1) according to Claim 1, having an apparatus (10) for determining the distance of a person, wherein the device (1) is configured such that the distance (9) between a detected person (8) and the device (1) can be determined by the device (1) itself.

3. Device (1) according to one of the preceding claims, wherein the person identification means (14) is configured, when the person is detected, to carry out a person identification using data from a person database (13) .

4. Device (1) according to Claim 3, wherein the device (1) is configured to detect, on the basis of the user data, what type of user is approaching the device (1) in order to automatically establish the person-related device operating state or a person-related device configuration while taking into account the person identification result.

5. Device (1) according to Claim 4, wherein the device (1) is configured to configure the device (1) to carry out a work process when the user is a device user, and wherein the device (1) is configured to change the device (1) to a maintenance mode when the user is responsible for maintaining the device (1).

6. Device (1) according to one of the preceding claims, wherein the device (1) is configured to store user-specific data relating to the work performed last or relating to the current user-specific device settings in a memory of an access means carried by the user when the user completes his work with the device (1) and to automatically change to the same operating state which prevailed when the work was completed when the user next approaches.

7. Method for operating a device (1) according to one of the preceding patent claims, having the steps of: monitoring the device environment for the purpose of detecting (S1) a person (8) in the environment of the device (1); automatically selecting a device function (S2) when the person (8) is detected, preferably with access (S3) to person-related data, and carrying out a person identification using a person database (13).

8. Method according to one of the preceding method claims, wherein, when a person (8) is detected, a first device function (3, 4, 5) is ended and a second device function (3, 4, 5) is activated (S4), wherein the first device function (3, 4, 5) is a device power-saving function.

9. Method according to one of the preceding method claims, wherein the device (1) automatically wirelessly interchanges (S5) data with an access authorization means (12) carried by the detected person (8) for the purpose of person identification.

10. Method according to one of the preceding method claims, wherein the device (1) detects, on the basis of the user data, what type of user is approaching the device (1) in order to itself establish (S6) the person-related device operating state or a person-related device configuration.

11. Method according to Claim 10, wherein the device (1) is configured to carry out a work process when the user is a device user, and wherein the device (1) changes to a maintenance mode when the user is responsible for maintaining the device (1).

12. Device (1) according to one of Claims 1 to 6, wherein the device (1) stores user-specific data relating to the work performed last or relating to the current user-specific device settings in a memory of an access means (12) carried by the user when the user completes his work using the device (1), and automatically changes to the same operating state which prevailed when the work was completed when the user next approaches.

## Revendications

1. Appareil (1), en particulier appareil de vissage ou appareil de rivetage ou appareil de soudage ou appareil de régulation d'entraînement, comprenant au moins une partie d'appareil (2) conçue pour mettre en œuvre au moins une ou plusieurs fonctions d'appareil (3, 4, 5) ; au moins un moyen de sélection de fonction d'appareil (6), conçu pour sélectionner au moins une des fonctions d'appareil (3, 4, 5) ; un premier moyen d'émission/réception sans fil conçu pour échanger des données sans fil avec un deuxième moyen d'émission/réception sans fil non inclus dans l'appareil (1), et un moyen d'identification de personne (14) conçu pour authentifier comme utilisateur de l'appareil (1) une personne (8) qui est autorisée à utiliser des fonctions de la partie d'appareil (2), **caractérisé par**
un moyen de détection (7) conçu pour détecter au moins une personne (8) à proximité de l'appareil (1) sans saisie manuelle sur l'appareil (1) par un utilisateur ; l'appareil (1) étant conçu pour sélectionner, lors de la détection de la personne (8) à l'aide du moyen de détection (7), l'une des fonctions d'appareil (3, 4, 5) à l'aide du moyen de sélection de fonction d'appareil (6) lui-même, par le fait que l'appareil (1) passe d'un mode d'économie d'énergie d'appareil à un mode d'identification d'utilisateur comme mode de fonctionnement seulement lorsqu'une personne (8) située à proximité de l'appareil (1) à une certaine distance de l'appareil (1) a été détectée avec le moyen de détection (7) sans saisie manuelle sur l'appareil (1), et effectue, dans le mode d'identification d'utilisateur, une activation du premier moyen d'émission/réception sans fil pour échanger des données d'identification de personne avec le deuxième moyen d'émission/réception sans fil à l'aide du premier moyen d'émission/réception sans fil, et pour activer, en tenant compte du résultat d'une identification de personne par le moyen d'identification de personne (14), un état de fonctionnement d'appareil personnel ou une configuration d'appareil personnelle de sorte que l'appareil (1) puisse passer dans l'état de fonctionnement d'appareil personnel ou dans une configuration d'appareil personnelle de l'utilisateur sans que l'utilisateur lui-même n'ait à effectuer des configurations quelconques sur l'appareil (1).

2. Appareil (1) selon la revendication 1, comprenant un dispositif (10) de détermination de distance de personne, l'appareil (1) étant conçu de telle sorte que la distance (9) d'une personne détectée (8) à l'appareil (1) puisse être déterminée par l'appareil (1) lui-même.

3. Appareil (1) selon l'une des revendications précédentes, le moyen d'identification de personne (14) étant conçu pour effectuer une identification de personne en utilisant des données d'une base de données de personne (13) lors de la détection de la personne.

4. Appareil (1) selon la revendication 3, l'appareil (1) étant conçu pour détecter sur la base de données d'utilisateur le type d'utilisateur qui s'approche de l'appareil (1) pour établir automatiquement l'état de fonctionnement d'appareil personnel ou une configuration d'appareil personnelle en tenant compte du résultat de l'identification de personne.

5. Appareil (1) selon la revendication 4, l'appareil (1) étant conçu pour configurer l'appareil (1) afin d'exécuter un processus de travail si l'utilisateur est un utilisateur d'appareil, et l'appareil (1) étant conçu pour mettre l'appareil (1) en mode de maintenance si l'utilisateur est responsable de la maintenance de l'appareil (1).

6. Appareil (1) selon l'une des revendications précédentes, l'appareil (1) étant conçu pour stocker des données, spécifiques à l'utilisateur et relatives aux derniers travaux effectués, ou les réglages d'appareil actuels, spécifiques à l'utilisateur, dans une mémoire d'un moyen d'accès amené par l'utilisateur lorsque l'utilisateur termine son travail avec l'appareil (1), et, lorsque l'utilisateur s'approche plus près, l'appareil passant automatiquement dans le même état de fonctionnement qu'à la fin des travaux.

7. Procédé de fonctionnement d'un appareil (1) selon l'une des revendications précédentes, ledit procédé comprenant les étapes suivantes : surveiller l'environnement de l'appareil afin de détecter (S1) une personne (8) dans l'environnement de l'appareil (1) ; sélectionner automatiquement une fonction d'appareil (S2) lorsque la personne (8) est détectée ; et effectuer, de préférence avec accès (S3) à des données personnelles, une identification de personne à l'aide d'une base de données personnelles (13).

8. Procédé selon l'une des revendications de procédé précédentes, une première fonction d'appareil (3, 4, 5) étant terminée et une deuxième fonction d'appareil (3, 4, 5) étant activée (S4), lorsqu'une personne (8) est détectée, la première fonction d'appareil (3, 4, 5) étant une fonction d'économie d'énergie d'appareil.

9. Procédé selon l'une des revendications de procédé précédentes, l'appareil (1) échangeant automatiquement des données sans fil avec un moyen d'autorisation d'accès (12) amené par la personne détectée (8) et destiné à l'identification de personne (S5).

10. Procédé selon l'une des revendications de procédé précédentes, l'appareil (1) détectant sur la base de données d'utilisateur le type d'utilisateur qui s'approche de l'appareil (1) afin d'établir lui-même l'état de fonctionnement d'appareil personnel ou une configuration d'appareil personnelle (S6).

11. Procédé selon la revendication 10, l'appareil (1) étant configuré pour exécuter un processus de travail si l'utilisateur est un utilisateur d'appareil, et l'appareil (1) étant mis en mode de maintenance si l'utilisateur est responsable de la maintenance de l'appareil (1).

12. Appareil (1) selon l'une des revendications 1 à 6, l'appareil (1) stockant des données, spécifiques à l'utilisateur et relatives aux derniers travaux effectués, ou les réglages d'appareil actuels, spécifiques à l'utilisateur, dans une mémoire d'un moyen d'accès (12) amené par l'utilisateur lorsque l'utilisateur termine son travail avec l'appareil (1), et, lorsque l'utilisateur s'approche plus près, l'appareil passant automatiquement dans le même état de fonctionnement qu'à la fin des travaux.
